Europäisches Patentamt

**(19)** European Patent Office

Office européen des brevets

**(11)** **EP 0 803 477 B1**

**(12)** **FASCICULE DE BREVET EUROPEEN**

**(45)** Date de publication et mention
de la délivrance du brevet:
**28.07.1999 Bulletin 1999/30**

**(51)** Int. Cl.[6]: **C03B 5/02**, C03B 5/00,
H05B 6/80, G21F 9/32

**(21)** Numéro de dépôt: **97400890.6**

**(22)** Date de dépôt: **21.04.1997**

**(54)** **Procédé et four de fusion homogène par micro-ondes à oscillation d'ondes stationnaires pour la vitrification de matériaux**

Verfahren und Ofen zum homogenen Schmelzen von verglasbaren Stoffen durch Mikrowellen des Types oszillierender Stehwellen

Process and furnace for homogeneous fusion of vitrifiable material by micro-waves of the oscillating stationary wave type

**(84)** Etats contractants désignés:
**BE CH DE GB LI**

**(30)** Priorité: **23.04.1996 FR 9605084**

**(43)** Date de publication de la demande:
**29.10.1997 Bulletin 1997/44**

**(73)** Titulaires:
• **COMMISSARIAT A L'ENERGIE ATOMIQUE**
**75015 Paris (FR)**
• **COMPAGNIE GENERALE DES MATIERES NUCLEAIRES**
**78140 Velizy Villacoublay (FR)**

**(72)** Inventeurs:
• **Vincent, Jean-Jacques**
**30200 Bagnols/Ceze (FR)**

• **Silve, Jean-Marc**
**13007 Marseille (FR)**
• **Cartier, René**
**84130 Le Pontet (FR)**
• **Frejaville, Hubert**
**07310 Saint-Martial (FR)**

**(74)** Mandataire: **Poulin, Gérard**
**Société BREVATOME**
**25, rue de Ponthieu**
**75008 Paris (FR)**

**(56)** Documents cités:
**EP-A- 0 507 668**

• **DATABASE WPI Section Ch, Week 04 Derwent Publications Ltd., London, GB; Class L01, AN 83-08440K XP002022116 & JP 57 202 098 A (NSG KK) , 10 Décembre 1982**

Printed by Xerox (UK) Business Services
2.16.7/3.6

## Description

<u>Domaine de l'invention</u>

L'invention concerne la vitrification et la "céramisation", c'est-à-dire la mise sous forme de vitrocéramique d'oxydes minéraux au moyen de micro-ondes. Elle s'applique, plus particulièrement, à la vitrification des déchets toxiques ou radioactifs, en vue de leur stockage définitif.

<u>Art antérieur et problème posé</u>

Le stockage des déchets toxiques, tels que les déchets radioactifs, pose de graves problèmes vis-à-vis de l'environnement. Afin d'éviter la dissémination de ce genre de matériaux, une solution largement connue consiste à immobiliser ce type de déchets dans des matériaux résistant aux différentes corrosions dans le temps. C'est ainsi que la vitrification permet l'immobilisation de ces déchets sous une forme stable à très longue échéance. Ces déchets peuvent être constitués, par exemple, de filtres en fibre de verre, d'amiante, de céramique ou de cendres d'incinération.

Dans le domaine des micro-ondes, il existe à l'heure actuelle deux types de procédés de vitrification qui sont des procédés multimodaux et des procédés monomodaux. Les procédés multimodaux sont avantageux car ils permettent d'avoir un four suffisamment grand et de traiter ainsi suffisamment de déchets pour une installation industrielle rentable fonctionnant en discontinu. Toutefois, avec cette technique, la distribution des champs électromagnétiques est anarchique et non uniforme. Le traitement thermique qui en résulte est hétérogène avec des points chauds où il y a risque de vaporisation et des points froids où le matériau risque d'être insuffisamment élaboré. La qualité du matériau vitrifié obtenu n'est donc pas constante, ce qui n'est pas admissible pour les matériaux aussi toxiques que les déchets radioactifs.

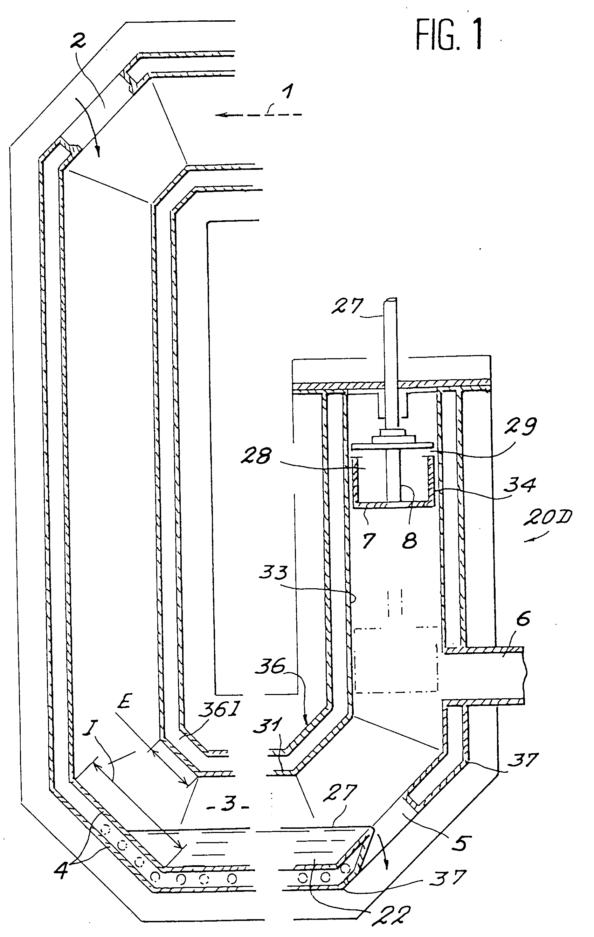

Le procédé monomodal consiste à opérer à l'aide d'un four de fusion à micro-ondes en ne laissant se propager que le seul mode fondamental de l'onde choisie. Ce procédé est décrit dans la demande de brevet français FR-A-2 674 939, déposée par la SOCIETE GENERALE POUR LES TECHNIQUES NOUVELLES S. G. N. Dans celui-ci, et en référence à la figure 1, les micro-ondes sont introduites par une entrée 1 d'un tube de section rectangulaire pour arriver dans une cuve 3 constituée par la base d'une partie recourbée du tube. Les matériaux à vitrifier sont introduits par une entrée supérieure 2 du côté de l'entrée 1 du tube où est placé le générateur de micro-ondes. L'onde incidente véhiculée arrive parallèlement à la surface du bain de verre et permet de s'affranchir des limitations de surface du bain imposées par des fonctionnements en ondes obliques ou perpendiculaires. Ce four possède une double enveloppe 4 refroidie à l'eau, de manière à figer le verre au contact de la paroi froide. Cette technique, dite de "l'auto-creuset" (le matériau fondu est contenu dans sa propre enveloppe), permet de se libérer de toutes contraintes liées à la corrosion, en ce sens que le verre en fusion n'est nulle part en contact avec les parois du four.

Enfin, le four est équipé d'un piston 8 comprenant une surface destinée à réfléchir l'onde incidente, non absorbée par le bain de verre. Cette surface 7 impose un régime d'onde stationnaire, aussi bien magnétique qu'électrique, à la surface du bain, dont l'emplacement des noeuds et des ventres électromagnétiques est directement lié à la position de cette surface 7. C'est pourquoi le piston 8 est monté coulissant dans la structure du four pour pouvoir régler cette position de la surface 7.

La stationnarité des noeuds et des ventres provoque la présence de zones froides et chaudes permanentes à la surface du bain de verre. La distance qui sépare un point chaud d'un point froid est égale à $\frac{\lambda g}{4}$, $\lambda g$ étant la longueur d'onde guidée. Ainsi, si on utilise une longueur d'onde courte, les maxima et minima thermiques ne sont pas trop éloignés et l'on obtient une homogénéisation des températures acceptable par convexion naturelle. C'est le cas lorsque l'on fonctionne à la fréquence de 2 450 MHz, où les champs faibles et les champs forts sont espacés d'environ 4 cm en guide normalisé. A cette fréquence, on peut disposer de générateurs allant jusqu'à 10 kW et qui permettent des capacités de traitement de 2 à 3 kg/h.

Par contre, si l'on souhaite disposer d'une capacité de traitement supérieure, avec des débits de l'ordre de la dizaine de kg/h, il faut disposer de générateurs micro-ondes de plus grande puissance. Il faut alors utiliser des générateurs fonctionnant à la fréquence de 915 MHz. A cette longueur d'onde, la distance qui sépare un point chaud d'un point froid est égale à

$$9 \text{ cm} = \frac{\lambda g}{4}$$

et il se crée alors à la surface du bain de verre une alternance de zones chaudes à 1 100°C et de zones vraiment froides à 500 ou 600°C, soit un gradient de température supérieur à 60°C/cm. Ces hétérogénéités thermiques deviennent alors rédhibitoires pour élaborer un verre de confinement pour les déchets radioactifs. Cette solution n'est donc pas acceptable.

Le but de l'invention est de proposer une solution technique pour homogénéiser les températures du bain de verre et permettre de produire un débit de 10 kg/h de verre d'une qualité compatible avec les exigences de confinement de déchets radioactifs.

<u>Résumé de l'invention</u>

Un premier objet principal de l'invention est donc un procédé de fusion par micro-ondes pour la vitrification de matériaux au moyen d'un corps comprenant

:

- une partie inférieure constituant une cuve de fusion ;
- un orifice d'entrée des matériaux ;
- un orifice de sortie des matériaux fondus, placé à hauteur du niveau souhaité de la surface du bain de fusion, fonctionnant ainsi par surverse ;
- un orifice de sortie des gaz ; et
- un orifice d'entrée des micro-ondes destinées à fondre les matériaux en continu par l'onde monomodale émise par un générateur de micro-ondes au-dessus du bain de fusion et par l'onde stationnaire réfléchie par la surface de réflexion placée dans le corps à l'opposé du générateur.

Selon l'invention, le procédé consiste à faire varier en continu la position de la face de réflexion pour faire varier en permanence la position des ventres de l'onde stationnaire, afin d'homogénéiser la température de tout le bain de fusion.

Dans sa mise en oeuvre principale, le procédé utilise une onde de longueur d'onde égale à 12 cm, c'est-à-dire une fréquence 915 MHz.

Le procédé donne cependant des résultats satisfaisants dans la plage de fréquences comprise entre 300 MHz et 3 GHz.

Un deuxième objet principal de l'invention est donc un four de fusion à micro-ondes pour la vitrification de matériaux, comportant :

- un corps comprenant une partie inférieure constituant une cuve de fusion de section constante sur la plus grande longueur possible, un orifice d'entrée des matériaux, un orifice de sortie des matériaux fondus placé à hauteur du niveau souhaité de la surface du bain de fusion, un orifice de sortie des gaz, un orifice d'entrée des micro-ondes, et une surface de réflexion des micro-ondes située du côté opposé à celui de l'entrée des micro-ondes ; et
- un générateur de micro-ondes relié à l'orifice d'entrée des micro-ondes.

Selon l'invention, le four comprend des moyens moteurs pour faire varier en permanence la distance séparant l'orifice d'entrée et la surface de réflexion afin de faire varier constamment la position des ventres de l'onde stationnaire à la surface du bain de verre.

Dans sa réalisation principale où la surface de réflexion est un piston monté coulissant, les moyens moteurs sont constitués de moyens pour mettre le piston en déplacement alternatif permanent.

Dans ce cas, où le corps et le piston sont de section rectangulaire, ces moyens moteurs comprennent :

- un moteur électrique ;
- une tige filetée entraînée en rotation par le moteur électrique ;
- un écrou monté sur la tige filetée ; et
- deux barres reliées à l'écrou et solidaire du piston.

Ce dispositif se complète avantageusement de deux inverseurs de fin de course, placés sur les parois internes ou corps, dans la partie duquel est placé le piston et d'une partie de contact solidaire du piston placée en saillie pour actionner les inverseurs, afin de commander le mouvement alternatif du piston.

Le générateur de micro-ondes se complète avantageusement d'un système d'amortissement de l'onde réfléchie.

Liste des figures

L'invention et ses caractéristiques techniques seront mieux comprises à la lecture de la description suivante d'un mode de réalisation de l'invention illustrée par les figures suivantes, représentant respectivement :

- figure 1, déjà décrite, un four selon l'art antérieur ;
- figure 2, le four selon l'invention, dans une réalisation principale ; et
- figure 3, une partie du four de la figure 2.

Description détaillée d'un mode de réalisation de l'invention

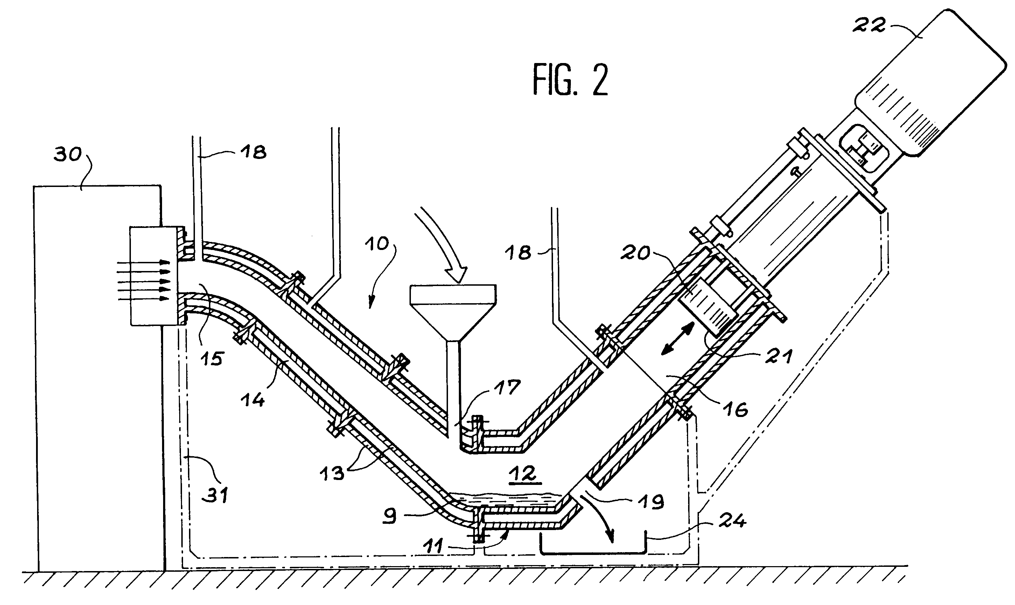

En référence à la figure 2, le corps 10 du four selon l'invention est constitué d'un tube en forme de V. La partie inférieure du V constitue une cuve 11 délimitant un espace interne 12 relativement haut pour qu'un bain de fusion 9 puisse y être formé et que sa surface se trouve bien en dessous de la paroi supérieure de cet espace 12. A l'entrée 15 de ce corps 10 est placé un générateur de micro-ondes 30 qui émet à l'intérieur du corps 10 l'onde de fréquence déterminée, en l'occurrence 915 MHz. A l'extrémité opposée 16 du corps 10 se trouve une surface de réflexion 21 qui est, dans ce cas, la face d'un piston 20 monté coulissant à l'intérieur de cette extrémité 16 du corps 10.

Un orifice d'entrée des matériaux 17 est prévu à l'entourage de la cuve 11. Ces derniers sont fondus par les micro-ondes sous la forme d'un bain de fusion 9. Un orifice de sortie des matériaux fondus 19 est prévu au niveau de la surface du bain de fusion 9. Ainsi, ceux-ci peuvent être déversés en continu dans une cuve de récupération 24 placée en dessous de cet orifice de sortie des matériaux fondus 19. Au moins une canalisation de sortie des gaz 18 est prévue, de préférence dans les parties supérieures du corps 10. Ce dernier est fixé sur un bâti rigide 31 posé sur le sol.

Comme précisé précédemment, le piston 20 est animé d'un mouvement alternatif plus ou moins lent à l'intérieur de l'extrémité 16 du corps 10. Les moyens moteurs de mise en translation de ce piston 20 sont réalisés, dans ce cas, au moyen d'un moteur électrique 22 entraînant un système vis-écrou, non représenté sur cette figure. Ainsi, comme l'indique la flèche positionnée à côté du piston 20, ce dernier est animé d'un mouvement alternatif en translation sur plusieurs centimètres. Or, la surface de réflexion 21 du piston 20 constitue pour l'onde stationnaire, créée par la réflexion de l'onde émise par le générateur de micro-ondes 30 à l'intérieur du corps 10, un noeud électrique obligatoire, aussi bien qu'un ventre magnétique obligatoire. En conséquence, les ventres et les noeuds de l'onde stationnaire seront tous déplacés à l'intérieur du corps 10 en fonction du déplacement de la surface de réflexion 21 du piston 20 d'une distance équivalente.

Pour une fréquence de 915 MHz, un champ fort (ventre) étant séparé d'un champ faible d'une distance $\frac{\lambda g}{4}$, par exemple 9 cm, on comprend que si le déplacement alternatif du piston 20 dépasse $\frac{\lambda g}{4}$, alors tous les points du bain de fusion g seront balayés par un champ fort (ventre). On procède ainsi à l'homogénéisation thermique du bain de fusion 9. Toutefois, on ajoute que, pour des fréquences plus élevées, cette distance étant plus courte, le procédé et le four selon l'invention fonctionne très bien, notamment pour des fréquences comprises entre 300 Mhz et 3 GHz.

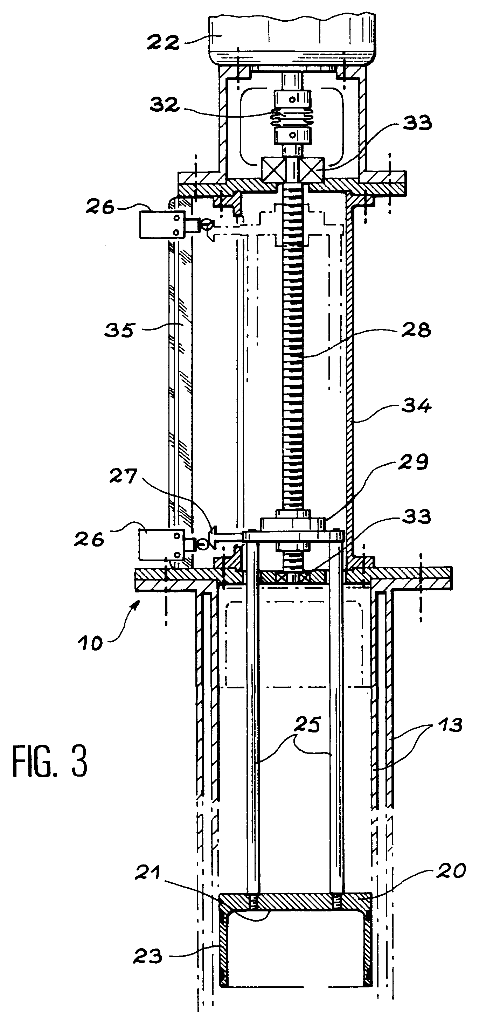

On se reporte maintenant à la figure 3, qui représente en détail les moyens moteurs qui provoquent l'oscillation du piston 20 de la figure 2. L'énergie est fournie par un motovariateur 22, c'est-à-dire l'association d'un moteur électrique et d'un système de commande de modulation de vitesse, entraînant en rotation une tige filetée 28. Celle-ci est maintenue tournante au moyen de deux paliers 33, à l'intérieur d'une gaine 34 placée dans le prolongement de la double paroi 13 du tube. On peut utiliser un accouplement souple 32 entre le motovariateur 32 et la tige filetée 28.

Un écrou 29 est monté par filetage autour de la tige filetée 28. Il est maintenu dans sa position en rotation par rapport à l'axe de la tige filetée 28 au moyen de deux barres 25 fixées air piston 20. Or, celui-ci étant de section rectangulaire et placé à l'intérieur du tube de section rectangulaire, les barres 25 maintiennent l'écrou 29 dans sa position. Comme celui-ci est monté par filetage sur la tige filetée 28, lorsque celle-ci tourne, l'écrou 29 se translate le long de l'axe longitudinal de la tige filetée 28 et entraîne, dans le même mouvement alternatif décrit précédemment, le piston 20 à l'intérieur de la double paroi 13 du tube.

La régulation du mouvement peut être assurée par deux interrupteurs 26 placés aux extrémités de la course envisagée de l'écrou 29, ce dernier portant une partie de contact 27 destinée à actionner les deux interrupteurs de fin de course 26, dans le but de commander le motovariateur 22, c'est-à-dire de provoquer une inversion du sens de rotation de la tige filetée 28.

On remarque que, dans la réalisation dessinée sur cette figure 3, le piston 20 est creux, c'est-à-dire qu'il possède une douille 23. Celle-ci permet de faciliter le guidage du piston 20 à l'intérieur de la double paroi 13 du corps. Il est possible de placer les interrupteurs de fin de course 26 de manière réglable sur une réglette 35 pour ajuster ainsi l'amplitude des oscillations du piston 20.

On peut ainsi faire parcourir au piston une course en translation alternée de 25 cm, ce piston se déplaçant à des vitesses comprises entre 0 et 40 cm/s.

Avec le dispositif selon l'invention, il est possible d'obtenir un débit de 8 à 10 kg de verre fondu, avec une température uniforme d'environ 1 100°C, en dissipant 15 kW dans le bain de fusion.

On peut envisager d'autres moyens que le piston 20 pour faire varier la position des ventres et des noeuds d'un phénomène monomodal avec ondes stationnaires, sans pour cela sortir du cadre de la présente invention.

**Revendications**

1. Procédé de fusion par micro-ondes pour la vitrification de matériaux dans un corps (10) comprenant :

   - une partie inférieure constituant une cuve de fusion (11) ;
   - un orifice d'entrée des matériaux (17) ;
   - un orifice de sortie des matériaux fondus (19), placé à hauteur du niveau souhaité du bain de fusion (9) ;
   - au moins un orifice de sortie des gaz (18) ; et
   - un orifice d'entrée des micro-ondes (15) pour fondre les matériaux en continu par une onde monomodale incidente crée par un générateur de micro-ondes (30) et une onde stationnaire réfléchie, au-dessus du bain de fusion (9) par une surface de réflexion (21) placée dans le corps (10) à l'opposé du générateur de micro-ondes (30), caractérisé en ce qu'on fait varier en continu la position de la face de réflexion (21) pour faire varier en permanence la position des ventres de l'onde stationnaire réfléchie, afin d'homogénéiser la température sur tout le bain de fusion (9).

2. Procédé selon la revendication 1, caractérisé en ce que la fréquence des micro-ondes est comprise entre 300 Mhz et 3 GHz.

3. Procédé selon la revendication 1, caractérisé en ce que la fréquence des micro-ondes est d'environ 915 MHz.

4. Four de fusion à micro-ondes à vitrification de matériaux, comportant :

   - un corps (10) comprenant une partie inférieure constituant une cuve de fusion (11) de section constante sur la plus grande longueur possible

;
- un orifice d'entrée des matériaux (17) ;
- un orifice de sortie des matériaux fondus (19) placé à hauteur du niveau souhaité de la surface du bain de fusion (9) ;
- au moins un orifice de sortie des gaz (18) ;
- un orifice d'entrée des micro-ondes (15) ;
- une surface de réflexion (21) des micro-ondes située du côté opposé à celui de l'orifice d'entrée des micro-ondes (15) ; et
- un générateur de micro-ondes (30) placé en regard de l'orifice d'entrée des micro-ondes (15),
  caractérisé en ce qu'il comprend des moyens moteurs (22, 28, 29) pour faire varier en permanence la distance séparant l'orifice d'entrée des micro-ondes (15) et la surface de réflexion (21), afin de faire varier constamment la position des ventres de l'onde stationnaire à la surface du bain de fusion.

5. Four selon la revendication 4, la surface de réflexion (15) étant un piston (20) monté coulissant, caractérisé en ce que les moyens moteurs sont constitués de moyens pour mettre le piston (20) en déplacement alternatif permanent.

6. Four selon la revendication 5, caractérisé en ce que le corps (10) et le piston (20) sont de section rectangulaire et que les moyens moteurs comprennent :

   - un moteur électrique (22) ;
   - une tige filetée (28) entraînée en rotation par le moteur électrique (22) ;
   - un écrou (29) monté par filetage sur la tige filetée (28) ; et
   - deux barres (25) reliées à l'écrou (29) et au piston (20).

7. Four selon la revendication 5, caractérisé en ce que les moyens moteurs comprennent :

   - deux interrupteurs de fin de course (26) sur le corps (10), en début et en fin de course (29);
   - une partie de contact (27) solidaire de l'écrou (29) et placée en saillie pour actionner les deux interrupteurs de fin de course (26), afin de commander le mouvement alternatif du piston (20).

8. Four selon la revendication 4, caractérisé en ce que le générateur de micro-ondes (30) possède un système d'amortissement de l'onde réfléchie.

**Claims**

1. Melting method by means of microwaves for vitrifying materials in a body (10) including:

   - a lower portion constituting a melting tank (11);
   - an inlet (17) for the materials;
   - an outlet (19) for the molten materials and placed at the desired height of the melting bath (9);
   - at least one gas outlet (18), and
   - an inlet (15) for the microwaves so as to continuously melt the materials by an incident monomodal wave created by a microwave generator (30) and a reflected stationary wave above the melting bath (9) by a reflecting surface (21) placed in the body (10) opposite the microwave generator (30),
     characterized in that the position of the reflecting face (21) is made to continuously vary so as to permanently vary the position of the antinodes of the reflected stationary wave and thus homogenize the temperature for the entire melting bath (9).

2. Method according to claim 1, characterized in that the frequency of the microwaves is between 300 MHz and 3 GHz.

3. Method according to claim 1, characterized in that the frequency of the microwaves is about 915 MHz.

4. Microwave melting oven for vitrifying materials including:

   - a body (10) including a lower portion constituting a melting tank (11) having a constant section over the largest possible length;
   - an inlet (17) for the materials;
   - an outlet (19) for the molten materials and placed at the desired height of the surface of the melting bath (9);
   - at least one gas outlet (18);
   - a microwave inlet (15);
   - a microwave reflecting surface (21) situated on the side opposite that of the microwave inlet (15), and
   - a microwave generator (30) placed opposite the microwave inlet (15),
     characterized in that it includes motor means (22, 28, 29) to permanently vary the distance separating the microwave inlet (15) and the reflecting surface (21) and thus constantly vary the position of the antinodes of the stationary wave on the surface of the melting bath.

5. Oven according to claim 4, the reflecting surface (15) being a sliding mounted piston (20), characterized in that the motor means are formed of means to alternatively and permanently move the piston (20).

6. Oven according to claim 5, characterized in that the body (10) and piston (20) both have a rectangular section and the motor means include:

- an electric motor (22);
- a threaded rod (28) driven in rotation by the electric motor (22);
- a nut (29) mounted by threading on the threaded rod (28) and
- two bars (25) connected to the nut (29) and the piston (20).

7. Oven according to claim 5, characterized in that the motor means include:

- two end of travel switches (26) on the body (10) at the start and end of travel (29);
- a contact portion (27) integral with the nut (29) and placed projecting so as to activate the two end of travel switches (26) and thus control the alternative movement of the piston (20).

8. Oven according to claim 4, characterized in that the microwave generator (30) has a system for damping the reflected wave.

**Patentansprüche**

1. Verfahren zum Schmelzen von verglasbaren Stoffen bzw. Materialien in einem Gehäuse (10), umfassend:

- einen eine Schmelzwanne bildenden Unterteil (11);
- eine Eingangsöffnung (17) der Materialien;
- eine Ausgangsöffnung der geschmolzenen Materialien (19), vorgesehen in der gewünschten Höhe des Spiegels des Schmelzbads (9);
- wenigstens eine Gasaustrittsöffnung (18); und
- eine Mikrowellen-Eintrittsöffnung (15), um die Materialien kontinuierlich durch eine eintreffende Monomodul- bzw. Monomoden-Welle, erzeugt durch einen Mikrowellengenerator (30), und eine Stehwelle zu schmelzen, reflektiert oberhalb des Schmelzbads (9) durch eine in dem Gehäuse (10) entgegengesetzt zum Mikrowellengenerator (30) angebrachte Reflexionsfläche (21), **dadurch gekennzeichnet,** daß man ständig die Position der Reflexionsfläche (21) verändert, um permanent die Position der Bäuche der reflektierten Stehwelle zu verändern und dadurch die Temperatur in dem gesamten Schmelzbad (9) zu homogenisieren.

2. Verfahren nach Anspruch 1, dadurch gekennzeichnet, daR die Frequenz der Mikrowellen enthalten ist zwischen 300 MHz und 3 GHz.

3. Verfahren nach Anspruch 1, dadurch gekennzeichnet, daR die Frequenz der Mikrowellen ungefähr 915 MHz beträgt.

4. Mikrowellen-Schmelzofen verglasbarer Stoffe bzw. Materialien, umfassend:

- ein Gehäuse (10) mit einem eine Schmelzwanne bildenden Unterteil (11) von konstantem Querschnitt über die größtmögliche Länge;
- eine Eingangsöffnung (17) der Materialien;
- eine Ausgangsöffnung der geschmolzenen Materialien (19), vorgesehen in der gewünschten Höhe des Spiegels des Schmelzbads (9);
- wenigstens eine Gasaustrittsöffnung (18);
- eine Mikrowellen-Eintrittsöffnung (15);
- eine Mikrowellen-Reflexionsfläche (21), auf der zur Mikrowellen-Eintrittsöffnung (15) entgegengesetzten Seite befindlich; und
- einen Mikrowellengenerator (30), angeordnet vor der Mikorwellen-Eintrittsöffnung (15), **dadurch gekennzeichnet,** daß er Antriebseinrichtungen (22, 28, 29) umfaßt, um permanent den Abstand zu verändern, der die Mikrowellen-Eintrittsöffnung (15) von der Reflexionsfläche (21) trennt, um ständig die Position der Bäuche der Stehwellen an der Oberfläche des Schmelzbads zu verändern.

5. Ofen nach Anspruch 4, wobei die Reflexionsfläche (15) ein gleitend montierter Kolben (20) ist, dadurch gekennzeichnet, daß die Antriebseinrichtungen durch Einrichtungen gebildet werden, die den Kolben in eine permanente Umkehrbewegung versetzen.

6. Ofen nach Anspruch 5, dadurch gekennzeichnet, daß das Gehäuse (10) und der Kolben (20) einen rechteckigen Querschnitt aufweisen, und daß die Antriebseinrichtungen umfassen:

- einen Elektromotor (22);
- eine Gewindestange (28), in Drehung versetzt durch den Elektromotor (22);
- eine auf die Gewindestange (23) geschraubte Mutter (29);
- zwei Stangen (25), verbunden mit der Mutter (29) und mit dem Kolben (20).

7. Ofen nach Anspruch 5, dadurch gekennzeichnet, daß die Antriebseinrichtungen umfassen:

- zwei Endschalter (26) in dem Gehäuse (10), am Anfang und am Ende des Hubs;
- ein Kontaktteil (27), fest mit der Mutter (29) verbunden und vorstehend, um die beiden Endschalter (26) zu betätigen und derart die Umkehrbewegung des Kolbens (20) zu steuern.

8. Ofen nach Anspruch 4, dadurch gekennzeichnet, daß der Mikrowellengenerator (30) ein Reflexionswellen-Dämpfungssystem besitzt.

FIG. 1

FIG. 2

FIG. 3